# EUROPEAN PATENT SPECIFICATION

(11) **EP 3 373 623 B1**
(45) Date of publication and mention of the grant of the patent: **11.09.2019**
(21) Application number: 18160960.3
(22) Date of filing: 09.03.2018
(51) Int. Cl.: H04L 29/08, H04W 8/24, H04W 4/24, H04L 12/26, H04L 12/14, H04M 15/00, H04W 88/02, H04W 24/02, H04W 88/06, H04W 84/12

(54) **METHOD FOR ENABLING CACHING FEEDBACK**
VERFAHREN FÜR ZWISCHENSPEICHERUNGSRÜCKKOPPLUNG
PROCÉDÉ POUR PERMETTRE UN RETOUR DE MISE EN MÉMOIRE CACHE

(30) Priority: 10.03.2017 EP 17160263
(43) Date of publication of application: 12.09.2018
(73) Proprietor: IPCom GmbH & Co. KG, 82049 Pullach (DE)
(72) Inventor: HANS, Martin, 31162 Bad Salzdetfurth (DE); SCHMIDT, Andreas, 38124 Braunschweig (DE); LUFT, Achim, 38118 Braunschweig (DE)
(74) Representative: Tomlinson, Edward James

(56) References cited:
- US-A1- 2016 191 664
- "3rd Generation Partnership Project; Technical Specification Group Services and System Aspects; Study on Enhancement of LTE for Efficient delivery of Streaming Service; Stage 1 (Release 15)", 3GPP DRAFT; S1-171214_3GTREPORT-ELESTR_SA1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 20 February 2017 (2017-02-20), XP051240234, Retrieved from the Internet: URL:http://www.3gpp.org/ftp/tsg_sa/WG1_Ser v/TSGS1_77_Jeju/docs/ [retrieved on 2017-02-20]
- CHINA TELECOM: "Enhancements of LTE for affordable Video/HD", 3GPP DRAFT; S1-163155-ENHANCEMENTSEOFELTEEFOREAFFORDAB LEEVIDEOHD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. SA WG1, no. Tenerife, Spain; 20161107 - 20161111 12 November 2016 (2016-11-12), XP051198989, Retrieved from the Internet: URL:http://www.3gpp.org/ftp/tsg_sa/WG1_Ser v/TSGS1_76_Tenerife/Docs/ [retrieved on 2016-11-12]

## Description

The present invention relates to the caching of data in a mobile communications system.

In cellular mobile communication systems, the basic communication path is between one base station and a single device. In some systems, shared channels are used, which can generally be received by multiple mobile devices in a cell and an addressing mechanism associates the data currently present on a given resource of the shared channel to a single user.

Most cellular communication systems provide in addition a broadcast mechanism in which data is transmitted to all devices without addressing any specific device. A broadcast is used for control information that needs to be received by mobile devices prior to accessing the cells, so called system information. In addition, some systems, e.g. UMTS and LTE, also provide broadcast channels for user data transmission, so called Multimedia Broadcast and Multicast Service (MBMS in UMTS and eMBMS in LTE) or alternatively the feature "Single Cell Point-to-Multipoint" (SCPTM). In general, the user data broadcast is useful for transmission of data that is relevant for multiple or all the devices in a coverage area. Compared to multiple or many dedicated connections between a content provider and devices in a coverage area, multicast is much more efficient and saves resources that can be used for other purposes.

Broadcast mechanisms in cellular mobile networks often use physical channels and transport channels that are tailored for broadcast data and dedicated for that purpose. Some broadcast mechanisms require multiple cells providing (e)MBMS to transmit the same data synchronously (in Single Frequency Network (SFN) fashion).

In 3GPP an enhancement for eMBMS has been developed that allows the usage of the DL shared channel (usually only used for DL data to single dedicated devices) to all UEs of a cell, i.e. a broadcast on the shared channel. The feature is called "Single Cell Point-to-Multipoint" (SCPTM) transmission) which makes broadcast transmissions easy to deploy for operators as they don't require cell synchronization and they allow different content in different cells.

Caching of data is a known technique for storing data that has been received once from a data source to reproduce the data when it is requested again. Caching is used in network proxies for networks in which multiple users require the same data from a content source to lower the data traffic on connections between the proxy and the traffic source. Caching is also used in the world wide web: web content is cached in the network e.g. proxy servers as well as locally by browser applications.

Data caching via broadcast is also well known in the television landscape, e.g. for the so-called teletext. The digital data imprinted on the TV broadcast signal was received by TVs or VCRs to be re-produced once the user opens the respective user interface. In this case caching was used to accelerate data availability compared to the provided bandwidth over the air.

3GPP is currently developing the next generation (5G) core network (NG CN) and radio interface (New Radio). An efficient broadcasting mechanism is one features that is agreed to be developed during the standardization phase. The broadcast will probably utilize either dedicated broadcast channels, for example in single frequency network fashion, or data channels shared with other services.

Discussions about efficient data caching are just starting in 3GPP without any potential solutions being proposed yet. It is expected that mobile network operators will ensure 5G systems include mechanisms for data caching in the mobile devices using efficient delivery, e.g. broadcast or multicast. These mechanisms are controlled at least in parts by the operator. For the network operator, a vital element of any caching feature is the ability to charge the subscriber and/or the content provider for the related data delivery, especially as without further enhancements in systems with data caching via broadcast delivery, there is no information available in the network about which device or which user actually makes use of the cached data.

For example, 3GPP document TR 22.cde V0.1.1 describes the delivery of data using a user caching service and a subsequent charging. 3GPP document S1-171456 from the TSG-SA WG1 Meeting #77 also relates to this concept.

In US 8,874,781 B2 it is proposed that a server in a mobile network assembles highly popular data ("social media entities") and broadcasts the data to mobile devices. The data to be assembled is defined in the network by observing the social media providers and requests of users.

US 8,954,600 B2 describes a system that comprises a gateway device, broadcasting means and computer devices. The gateway device receives content (e.g. web sites) from the internet, e.g. a web server, and compresses the received data. The data is then broadcast to a high number of devices for later consumption.

US 2016/0191664 describes a system wherein an agent on a mobile user device pre-fetches, i.e. caches required content, and reports the consumed cached content back to the cache content serving predictive prefetching, PPF, server.

In known systems, mechanisms allow a content provider or a network operator to analyse consumed data and predict based on the analysis further data consumption. Requests of the same data by further users or future data consumption by the same user may be predicted. Based on the prediction, data is provided from one or more content providers to mobile devices for caching.

Independent of the collection of the content to be cached, the transport mechanism for caching in cellular mobile networks will be controlled and owned by a mobile network operator who generally wants to charge for data delivery. (Note: "charging" is used herein in the sense of accounting for a service).

Two alternatives for charging the user for the caching service as such are contemplated. The operator may charge for the caching service regardless of the data consumption within the devices or the operator may charge for actual data consumption.

Known solutions are lacking for the latter, i.e. enabling the network operator to charge for actual data consumption from the cache in a fair way. Fair, in the sense of the present invention, means that operators are enabled to charge for the actual benefit of the caching service to the user. In situations where the benefit is low or negligible, despite actual data consumption from the cache, the network operator should be enabled to adapt the charging for the service, e.g. refrain from charging or reduce the price.

The present invention provides a method of processing data in a user equipment, UE, device, the method comprising storing in a cache data received from at least one of a mobile communications network and a local access network; at a later time, processing the data stored in the cache; and transmitting a message to the mobile communications network to inform the network that the data stored in the cache has been processed, characterized in that the message comprises information about an availability of at least one network when the data stored in the cache was processed.

In a further aspect, the invention provides a method of processing data in a mobile communications network, the method comprising receiving information regarding data consumption of previously cached data from a cache of a user equipment device attached to the network, characterized in that the received data consumption information comprises information about an availability of at least one network when the cached data was processed.

The invention provides an enhancement of the provisioning of data consumption information from a user device to a network.

The data consumption information may comprise information about data previously received by the device, stored in a cache of the device, later read from the cache and consumed. The consumption may comprise rendering of media data and presentation to a user of the device, processing the data within an application (app) on the device or the operating system (OS) or using the data to replace other data like firmware or map data updates.

In one example the data consumption information comprises environmental information of the device at the time of the data consumption from the cache. The environmental information enables the network operator to differentiate the charges applied to the data consumption to which the data consumption information refers.

The environmental information may comprise:
availability of networks other than the network the data consumption information is provided to. The availability may be a physical availability, e.g. access to a WiFi-network, potentially including IP-connectivity, or an accessibility of the content provider network that provided a specific content consumed from the cache
information about the serving visited network in a roaming scenario. Information about the connected radio access technology (RAT); e.g. GSM, UMTS, LTE, 5G, or satellite link.
information about the quality of the network or such other networks, e.g. signal strength, data rate, or latency.
link identification of such other networks, e.g. local IP-address allocated to the device or global IP-address of the device.
location information, e.g. whether a user resides in a home or office environment while consuming data from the cache or in general, the location of the user during data consumption from the cache.
information about date and time of the data consumption.
information about velocity or height during data consumption.

The provision of data consumption information allows the operator to adapt the charging to the benefit the caching has provided to the user. If at the time of consumption of data from the cache the user was in an environment that provided a different network that provides data basically for free, the operator could refrain from charging the consumption. Likewise, if the user was in a home or office environment that usually allows data consumption for free, potentially on different devices, the cache consumption information enables an operator to adjust the charging.

In another example, the network to which the device provides the data consumption information is a cellular mobile network that serves the device. The cellular mobile network may be the network that delivered the cached content data to the device and that applies appropriate charging for the content delivery. The charging may include charging the subscriber / user of the device or the content provider or both. Charging may be monetary or non-monetary. Charging may also include accounting the consumed data in full or in parts as part of a data plan the subscriber has with the network operator.

The device may be a mobile device capable of cellular mobile communication and potentially additional radio communication technologies. The device may be alternatively a fixed device capable of fixed broadband access and additional wireless or wireline communication technologies.

In another example, the data consumption information provisioning from the user device to the network may be configured by the network. The configuration may comprise provisioning of filters or rules to the device which comprise conditions for provisioning of data consumption information to the network. The filters may be based on the environmental information as defined above.

The filters may define location dependent conditions, e.g. areas, in which data consumption from the cache in the device will or will not trigger generation and/or transmission of data consumption information.

The filters may define time dependent conditions, e.g. time intervals, during which data consumption from the cache in the device will or will not trigger generation and/or transmission of data consumption information.

Multiple filters may be provided for multiple content providers and/or multiple access networks; e.g. different filters and rules may apply to different content providers and/or network operators.

The filters may contain reporting rules like a threshold for data consumption before data consumption information is generated and / or transmitted. The rules may comprise media or data type information so that data consumption information is generated only for specified media or data types or it is not generated for specified media of data types.

Rules and filters enable network operators to configure devices to efficiently generate and transmit cached data consumption information. The environmental information provided to the network in relation to data consumption information allows fair charging. Rules and / or filters based on such environmental information increases provisioning efficiency between the device and the network.

In general, the generation of cached data consumption information and the transmission of such information can be separated. The triggers for the former and the latter can be different so that generated data consumption information records are collected or stored within the device until transmission is triggered for all or a part of collected records. The trigger for generation and transmission may be dynamic or fixed. A trigger for generation is typically based on the consumption of data while a trigger for transmission may be based on timers to keep the frequency of messages being exchanged below a threshold and/or ensure timely information availability at the network. Also, the number of records collected or amount of data consumed may trigger transmission of information to the network.

In the network the data consumption information is received and based on the information, charging of the user or the content provider may be processed. To ensure a fair charging experience for the service for a user, the network takes the environmental information received together with the information into account. Whether charging cached data consumption is fair or not is dependent on the availability of alternative networks with possibly different cost plans. Cached data consumption information enables a network operator to base the charging of cached data consumption upon this information.

Preferred embodiments of the invention will now be described, by way of example only, with reference to the accompanying drawings in which:
- Fig.1: shows a schematic representation of a UE incorporating a cache;
- Fig. 2: shows a schematic interconnection between UEs and networks;
- Fig. 3: is a schematic representation of a cellular network showing movement of UEs;
- Fig. 4: shows exemplary charging records; and
- Fig. 5: shows further exemplary charging records.

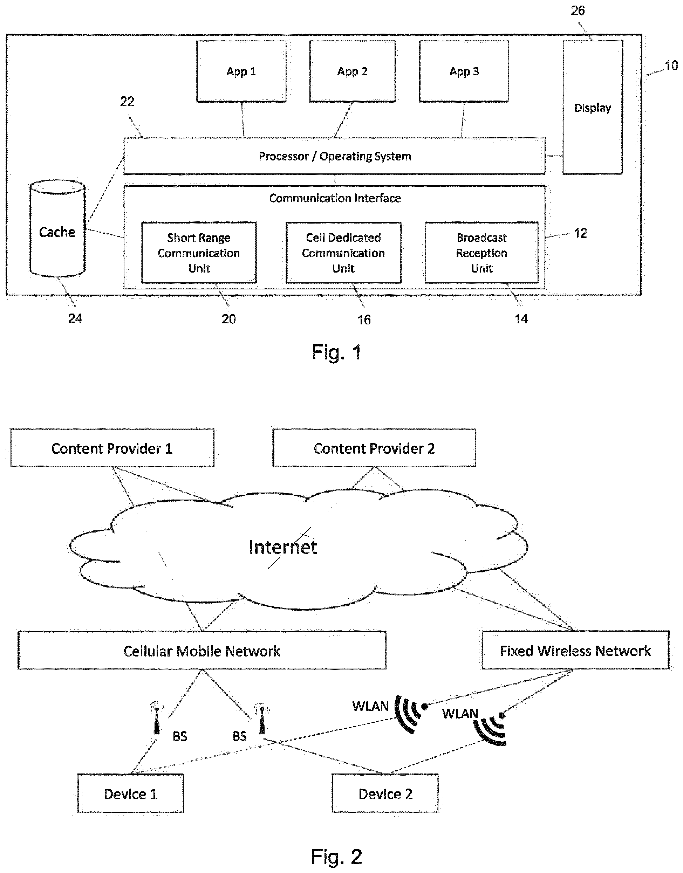

Fig. 1 shows a device 10 comprising a communication interface 12. The communication interface comprises a broadcast reception unit 14. This may be a part of a cellular modem that is enabled to receive data via broadcast channels or via shared channels that are used to provide data to multiple devices simultaneously. The broadcast may also be deployed as a multicast, e.g. a broadcast transmission whose reception is limited to a group of devices. The broadcast reception unit may also comprise a receiver for TV or radio broadcasting systems, e.g. DVB-T or DVB-S, DAB and alike. According to this embodiment, the broadcast reception unit is used to provide data originating from a content provider and transmitted by the network to the device 10, the data being cached locally within the device.

The communication interface 12 comprises a cellular dedicated communication unit 16 that comprises a cellular mobile communication modem for exchanging data between the device and one or more base stations which data is dedicated to the device or coming from the device. According to this embodiment, the cellular dedicated communication unit 16 is used by the device to transmit data to the network, e.g. data consumption information including environmental information, and by the network to transmit dedicated information to the device, e.g. a configuration of the data consumption information provisioning.

The communication interface 12 also comprises a short-range communication unit 18, for example a WiFi and/or a Bluetooth communication modem, which may be suitable for the device to receive content data from one or more content provider.

As shown in Fig. 1, the device 10 comprises an operating system (OS) 20 that operates applications App 1 - App 3 and communicates with the communication interface. It may also be responsible for managing and controlling a cache 22.

As mentioned, the device comprises the cache 22 that is a storage for storing data for future usage by applications or an operating system. The cache 22 may be a separate memory on the device or it may be a memory on a UICC connected to the device, either embedded or as a chip card in a slot. Alternatively, and most likely, the cache may be part of the device non-volatile memory as a shared memory resource, e.g. for applications, an OS, user data and other data.

The device 10 further comprises a display 24 for displaying the current user interface. It is controlled by an OS.

As indicated, the device also comprises several applications. Fig. 1 shows as an example three applications (App 1, App 2 and App 3) that utilize the OS or in other words that are operated by the OS. Usually in actual systems a larger number of applications are active in parallel or at least installed but currently inactive.

Fig. 2 shows a simplified network that supports data delivery between two content providers (content provider 1 and content provider 2) and two mobile devices (device 1 and device 2). Device 1 and device 2 are connected to a cellular mobile network that provides communication, e.g. via an air interface between a base station (BS) and device 1 and another or the same air interface between a base station (BS) and device 2. The devices may additionally be connected to a fixed wireless network, such as a local network with wireless access points connected to the internet via a fixed broadband access e.g. DSL, cable network. This connection is only available in appropriate locations. Dashed lines are used in Fig. 2 between the devices and respective WLAN access points to illustrate the opportunistic availability of that connection. The content providers are connected to both, the cellular mobile network and the fixed wireless network through the internet.

The simplified network of Fig. 2 is only exemplary. Devices can be connected to multiple networks of different or same type, more than the two shown in the figure. Also, content providers may be connected directly, i.e. without routing through the public internet, to the different networks. Content providers may also use other networks than the internet to connect to access or delivery networks or content providers may reside inside the cellular mobile network or another access network.

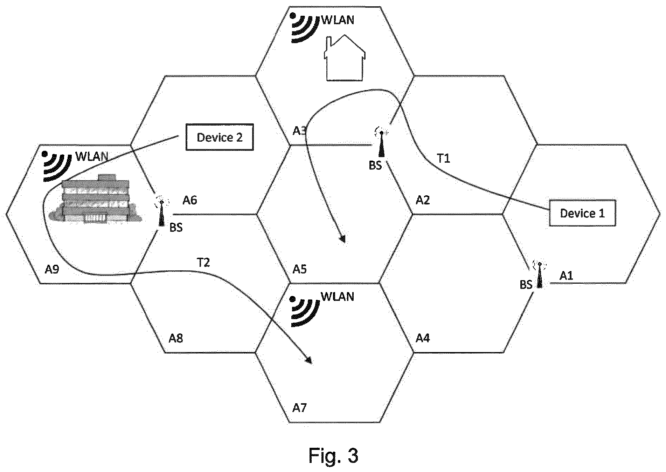

Fig. 3 shows a map with different areas, each area depicted as a hexagon for illustration purposes only. The different areas (A1 to A9) are covered by cells of a cellular mobile network, the cells spanned by base stations (BS) of the cellular mobile network shown in Fig. 3. Assuming every base station (BS) fully covers its three adjacent areas and no other areas, as shown in Fig. 3 area A7 is not covered by the cellular mobile network.

Three of the areas are additionally covered by wireless local area network access points (WLAN). One area may be defined as a home area of a specific user, depicted by a house in Fig. 3 and one area may be defined as an office area for a specific user, depicted by an office building. In this arbitrary example, both the home area and office area are covered by respective WLAN access points. Another area may be covered by a WLAN access point which is neither the home nor the office area; it may be an area with public WLAN coverage.

Two devices, device 1 and device 2, are depicted in Fig. 3. The devices may be like those in Fig. 2 and Fig. 1, e.g. they may have communication interfaces for cellular mobile access networks and for WLAN access networks. For each of the devices a respective trajectory (T1 and T2) is depicted that describes a movement of the respective devices between different of the shown areas.

The following example illustrates the principles of the current invention.

At any point in time device 1 resides in area A1 and the cellular mobile network may provide content of content provider 1 to devices in area A1 for caching and later usage by content consumers of device 1. The provision of content may be broadcast by the base station of the cellular mobile network covering A1. Device 1 receives the broadcasted content or parts thereof and stores the content in a local cache.

As device 1 moves from area A1 to A2, the provision of contents may continue through the same or a different base station of the same or a different cellular mobile network. In this example the same cellular mobile network may provide content for caching through a different base station (BS) in area A2.

Device 1 may at any time after it received content for caching move to area A3 which is the user's home area. Device 1 may connect to a fixed wireless network via a WLAN access point (WLAN) in parallel to the connection to the mobile cellular network via a base station (BS).

For example, the user of device 1 may use an application on the device in his home area and request content that has already been received from the mobile operator and stored in the cache of the device. The user may request to see a video which is presented from the cache. The presentation from the cache may trigger the generation of data consumption information including environmental information in the device in the form of a charging cached data record.

The charging cached data record may be generated using rules with which the device has been configured in advance. One record within the data consumption information may refer to a single piece of data, e.g. a single file or a single media file, or it may refer to a larger amount of data, e.g. a group of files or all media files belonging to a single piece of video or audio, or a specific amount of data, e.g. several bytes consumed. In the example, the generation of a charging cached data record may be triggered by the end of the video, i.e. stopping the video rendering because of user interaction or because all media files belonging to that video have been presented.

A charging cached data record may contain one or more of the following non-exhaustive list of information elements
content information about the consumed cached data
time of cached data consumption
location of cached data consumption
availability of alternative networks

The content information may comprise reference information which may refer to the consumed cached data in the form of a file reference, e.g. a file name, a universal resource locator (URL) or universal resource identifier (URI) or a hash value (e.g. md5), or any other identity received during caching content provisioning from the network. The content information may include a size information about the data size consumed, e.g. in kilobytes, or any combination thereof. In our example, as the user watches a video, the content information includes a reference which may include a title of the video. In addition, the content information comprises the amount of data loaded from the cache.

The reference information is optional. For privacy reasons, it may not be part of the content information at all. In an alternative embodiment the above content information only contains the amount of data and/or the type of data.

The time of consumption may be an exact time stamp or a date or a week day or a time of day like morning, afternoon, evening, night. In our example, the time of consumption may be the hour of the time of day.

The location of consumption may be any location information, e.g. geolocation coordinates taken from a GPS receiver of the device, cell IDs of the mobile network or WLAN SSIDs the device receives at the time of consumption, an indication whether the area is an identified area, e.g. a home area or an office area, or any combination thereof. In our example, the location of consumption may be an indication of the home area.

The availability of alternative networks may be information about accessibility of a short range wireless network, e.g. a WLAN access point or a Bluetooth hotspot. The information may also include IP-connectivity information, e.g. whether the internet or the content provider can be accessed via the alternative network. The information can also contain a result of an attempt to connect to the content provider, e.g. a DNS resolution result (current IP-address of the content provider's server) or a token received from the content provider that is a prove of a connection at the time. In our example, the available alternative network information may indicate the WLAN identity (SSID) and a flag indicating accessibility of the internet via that WLAN access point.

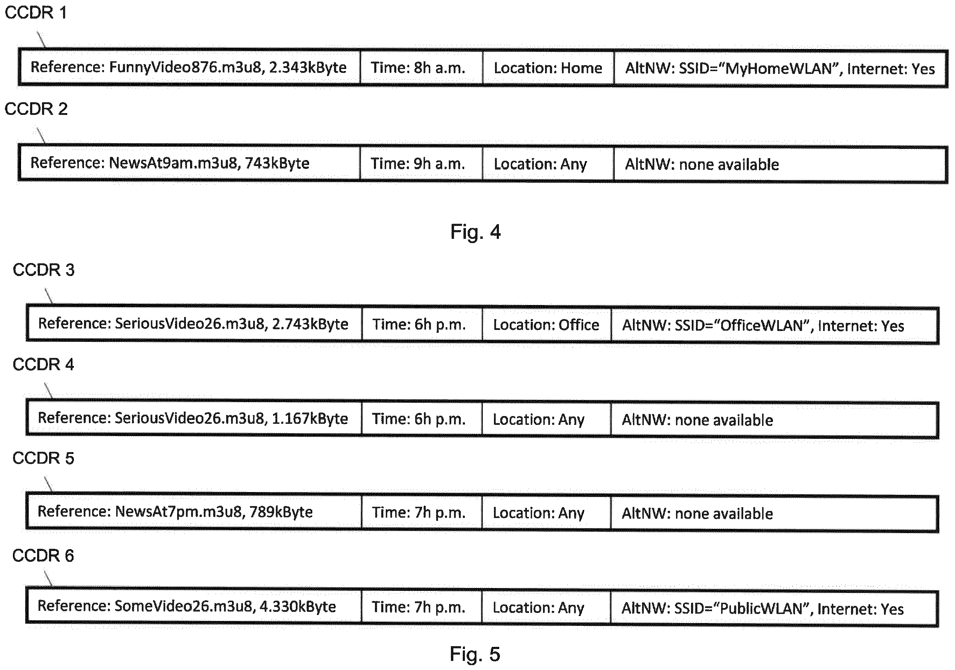

Fig. 4 shows example wise a charging cached data record CCDR 1 as generated in the device of the example above.

Device 1 may then move to area A5 in which no alternative network is available. In that area, the user may use another application on the device and request other content that has been received previously from the mobile operator and stored in the cache of the device. The user may request to hear an audio file which is reproduced from the cache. The reproduction from the cache may trigger the generation of further data consumption information in the device in the form of a further charging cached data record CCDR 2. The reference to the consumed cached data, the time and location information and the available network information is adapted per the new environment. The information reflects the fact that no alternative network is available. The new charging cached data record, CCDR 2, is also depicted in Fig. 4.

Device 1 may be configured by the network to collect, i.e. store, generated charging cached data records until a transmission is triggered. The trigger for transmission may be a threshold for the number of collected records or a time-based trigger, e.g. transmission at least once a day. In our example device 1 may transmit charging cached data records CCDR 1 and CCDR 2 together in an appropriate message to the cellular mobile network.

Device 2 may receive content data for caching in area A6 via cellular broadcast. After that the device moves to area A9 which is the user's office area providing WLAN access to the internet. The user of that device may start to watch a video played from the cache in that area before leaving for area A8 where he continues to watch that video. Area A8 is not identified to have a special relation to the user of device 2 and it does not provide any alternative connectivity. After watching the video in area A8 the user listens to an audio file from the cache before moving to area A7 which does also not have a special relation to the user of Device 2 but where public (free) WLAN connectivity is offered to the device. The user watches another video played from the cache at that location. Thus, four charging cached data records CCDR 3 to 6 are generated by device 2, depicted in Fig. 5. The consumption of a video in areas A9 and A8 generated two charging cached data records. The change between the office area and another area may have triggered the generation of a second charging cached data record. Alternatively, the change from an area with WLAN access to an area without may have triggered the generation of the record. Device 2 may have been configured to transmit records whenever the cumulated data consumption recorded exceeds eight Megabytes. Thus, charging cached data records CCDR 3 to 6 are transmitted collectively to the mobile network.

An alternative configuration of filters in device 2 could have been that only records are generated, if the location is not identified to have a special relation to the device's user, i.e. either home or office in our example. Thus, only charging cached data records CCDR 4 and CCDR 6 would have been generated by device 2. Similarly, many alternative examples can be thought of to configure, generate and transmit charging cached data records.

In the cellular mobile network, charging cached data records CCDR 1 to 6 are received according to the examples above.

Charging cached data record CCDR 1 indicates to the network that a video has been consumed from the cache by device 1 or its respective user, but the use of the caching for the user was negligible, as in the home environment basically free WLAN access would have provided the same user experience, i.e. high quality video for no extra cost. Thus, the network may refrain from charging the user for providing the video data via broadcast.

In contrast to the user, the content provider takes advantage of the broadcasting and caching as the massive broadcast of data safes the content provider's delivery resources in comparison to a dedicated video stream via the fixed wireless network of the user's home environment. Thus, depending on a business relation, the network operator may decide to charge the content provider for the caching service.

As charging cached data record CCDR 2 indicates that no alternative network was available for delivery of the audio file, the user has the full benefit of caching and may be charged.

Similarly, charging cached data records CCDR 4 and 5 may lead to charging of the user of device 2 in the cellular mobile network while charging cached data records CCDR 3 and 6 may not lead to charging the user.

Alternatively, in addition to the information fields above, the charging cached data records may also indicate the availability of the actual cellular mobile network. As depicted in Fig. 3, area A7 may not be covered by the cellular network at all and for this special situation, different charging mechanisms may apply. The operator could apply even higher charges to the user, as he does not have any other means to consume the data than from the cache. The operator could also apply lower charges as a compensation of missing coverage in that area.

For roaming cases, the records may contain roamed-to network information, to take the higher costs of dedicated delivery of data as an alternative to cached data into account.

In the examples above, the charging cached data records have been transmitted from respective devices to the cellular mobile network. In other examples, the information could be transmitted to entities outside that network, e.g. entities that provide the special feature of charging cached data or analysing the cached data consumption environmental information from the device.

Providing cached data consumption information together with environmental information, especially information about accessibility of alternative networks, enables an operator to apply fair charges of the caching service at a network.

## Claims

1. A method of processing data in a user equipment, UE, device (10), the method comprising:
storing in a cache (24) data received from at least one of a mobile communications network and a local access network;
at a later time, processing the data stored in the cache (24); and
transmitting a message to the mobile communications network to inform the network that the data stored in the cache (24) has been processed, **characterized in that** the message comprises information about an availability of at least one network when the data stored in the cache (24) was processed.

2. The method according to claim 1, wherein the information about an availability of at least one network comprises information about at least one network other than the mobile communications network.

3. The method according to claim 2, wherein the information about at least one network other than the mobile communications network comprises at least one of a physical availability of at least one wireless local access networks, WLANs, an availability of internet protocol, IP, connectivity via the at least one other network, and an accessibility via the at least one other network of a network providing the data for processing in the UE device without storing the data in a cache.

4. The method according to claim 2, wherein the information about the at least one network other than the mobile communications network comprises information about availability of a visited mobile communication network.

5. The method according to any preceding claim, wherein the processing is one of rendering of media data and presentation to a user of the UE device, updating information or software stored on the UE device, and using the data by an application operating on the UE device.

6. A method of processing data in a mobile communications network, the method comprising receiving information regarding data consumption of previously cached data from a cache (24) of a user equipment device (10) attached to the network, **characterized in that** the received data consumption information comprises information about an availability of at least one network when the cached data was processed.

7. The method according to claim 6, wherein the mobile communications network generates charging information based on the availability of at least one other network when the cached data was processed.

8. The method according to claim 7, wherein the information about at least one other network comprises information about at least one of a physical availability of one or more wireless local access networks, WLANs, an availability of internet protocol, IP, connectivity via the one or more networks, and an accessibility via the one or more networks of a network providing the data for processing in the UE device without storing the data in a cache.

9. The method according to claim 7 or claim 8, wherein the information about at least one other network comprises information about availability of a visited mobile communication network.

## Patentansprüche

1. Verfahren zum Verarbeiten von Daten in einem Anwendergerät, UE, (10), wobei das Verfahren Folgendes umfasst:
Speichern in einem Zwischenspeicher (24) von Daten, die von einem Mobilkommunikationsnetz und/oder einem lokalen Zugangsnetz empfangen wurden;
Verarbeiten der Daten, die im Zwischenspeicher (24) gespeichert sind, zu einem späteren Zeitpunkt; und
Senden einer Nachricht zum Mobilkommunikationsnetz, um das Netz zu informieren, dass die im Zwischenspeicher (24) gespeicherten Daten verarbeitet worden sind, **dadurch gekennzeichnet, dass** die Nachricht Informationen über eine Verfügbarkeit mindestens eines Netzes, während die im Zwischenspeicher (24) gespeicherten Daten verarbeitet wurden, umfasst.

2. Verfahren nach Anspruch 1, wobei die Informationen über eine Verfügbarkeit des mindestens einen Netzes Informationen über mindestens ein Netz außer dem Mobilkommunikationsnetz umfassen.

3. Verfahren nach Anspruch 2, wobei die Informationen über mindestens ein Netz außer dem Mobilkommunikationsnetz eine physische Verfügbarkeit mindestens eines drahtlosen lokalen Zugangsnetzes, WLAN, eine Verfügbarkeit einer Internetprotokollkonnektivität, IP-Konnektivität, mittels des mindestens einen weiteren Netzes und/oder eine Erreichbarkeit eines Netzes, das die Daten zum Verarbeiten im UE ohne Speichern der Daten im Zwischenspeicher bereitstellt, mittels des mindestens einen weiteren Netzes umfassen.

4. Verfahren nach Anspruch 2, wobei die Informationen über das mindestens eine Netz außer dem Mobilkommunikationsnetz Informationen über eine Verfügbarkeit eines besuchten Mobilkommunikationsnetzes umfassen.

5. Verfahren nach einem vorhergehenden Anspruch, wobei das Verarbeiten ein Rendern von Mediendaten und eine Darstellung für einen Anwender des UE, ein Aktualisieren von Informationen oder Software, die im UE gespeichert sind, oder ein Verwenden der Daten durch eine Anwendung, die auf dem UE arbeitet, umfassen.

6. Verfahren zum Verarbeiten von Daten in einem Mobilkommunikationsnetz, wobei das Verfahren ein Empfangen von Informationen hinsichtlich eines Datenverbrauchs zuvor zwischengespeicherter Daten aus einem Zwischenspeicher (24) eines Anwendergeräts (10), das mit dem Netz verbunden ist, umfasst, **dadurch gekennzeichnet, dass** die empfangenen Datenverbrauchsinformationen Informationen über eine Verfügbarkeit mindestens eines Netzes, während die zwischengespeicherten Daten verarbeitet wurden, umfassen.

7. Verfahren nach Anspruch 6, wobei das Mobilkommunikationsnetz Gebührenerfassungsinformationen auf der Grundlage der Verfügbarkeit des mindestens einen weiteren Netzes, während die zwischengespeicherten Daten verarbeitet wurden, erzeugt.

8. Verfahren nach Anspruch 7, wobei die Informationen über mindestens ein weiteres Netz Informationen über eine physische Verfügbarkeit eines oder mehrerer drahtloser lokaler Zugangsnetze, WLANs, eine Verfügbarkeit einer Internetprotokollkonnektivität, IP-Konnektivität, mittels des einen oder der mehreren Netze und/oder eine Erreichbarkeit eines Netzes, das die Daten zum Verarbeiten im UE ohne Speichern der Daten im Zwischenspeicher bereitstellt, mittels des einen oder der mehreren Netze umfassen.

9. Verfahren nach Anspruch 7 oder Anspruch 8, wobei die Informationen über mindestens ein weiteres Netz Informationen über eine Verfügbarkeit eines besuchten Mobilkommunikationsnetzes umfassen.

## Revendications

1. Procédé de traitement de données dans un dispositif d'équipement utilisateur, UE, (10), le procédé comprenant les étapes suivantes :
stocker dans une mémoire cache (24) des données reçues d'au moins l'un d'un réseau de communications mobiles et d'un réseau d'accès local ;
traiter, ultérieurement, les données stockées dans la mémoire cache (24) ; et
transmettre un message au réseau de communications mobiles pour informer le réseau que les données stockées dans la mémoire cache (24) ont été traitées,
le procédé étant **caractérisé en ce que** le message comprend des informations sur la disponibilité d'au moins un réseau lorsque les données stockées dans la mémoire cache (24) ont été traitées.

2. Procédé selon la revendication 1, dans lequel les informations sur la disponibilité d'au moins un réseau comprennent des informations sur au moins un réseau autre que le réseau de communications mobiles.

3. Procédé selon la revendication 2, dans lequel les informations sur au moins un réseau autre que le réseau de communications mobiles comprennent au moins une information parmi la disponibilité physique d'au moins un réseau local d'accès sans fil, WLAN, la disponibilité d'une connectivité de protocole Internet, IP, par l'intermédiaire de l'au moins un autre réseau, et l'accessibilité, par l'intermédiaire de l'au moins un autre réseau d'un réseau fournissant les données pour traitement dans le dispositif d'UE sans stocker les données dans une mémoire cache.

4. Procédé selon la revendication 2, dans lequel les informations sur l'au moins un réseau autre que le réseau de communications mobiles comprennent des informations sur la disponibilité d'un réseau de communications mobiles visité.

5. Procédé selon l'une quelconque des revendications précédentes, dans lequel le traitement est l'un des traitements suivants : effectuer un rendu de données multimédia et d'une présentation à l'attention d'un utilisateur du dispositif d'UE, mettre à jour des informations ou un logiciel stockés sur le dispositif d'UE, et utiliser les données par une application fonctionnant sur le dispositif d'UE.

6. Procédé de traitement de données dans un réseau de communications mobiles, le procédé comprenant de recevoir des informations concernant la consommation de données de données précédemment mises en mémoire cache à partir d'une mémoire cache (24) d'un dispositif d'équipement utilisateur (10) rattaché au réseau, **caractérisé en ce que** les informations de consommation de données reçues comprennent des informations sur la disponibilité d'au moins un réseau lorsque les données en mémoire cache ont été traitées.

7. Procédé selon la revendication 6, dans lequel le réseau de communications mobiles génère des informations de taxation sur la base de la disponibilité d'au moins un autre réseau lorsque les données en mémoire cache ont été traitées.

8. Procédé selon la revendication 7, dans lequel les informations sur au moins un autre réseau comprennent des informations sur au moins la disponibilité physique d'un ou plusieurs réseaux locaux d'accès sans fil, WLAN, la disponibilité d'une connectivité de protocole Internet, IP, par l'intermédiaire des un ou plusieurs réseaux d'un réseau fournissant les données pour traitement dans le dispositif d'UE sans stocker les données dans une mémoire cache.

9. Procédé selon la revendication 7 ou la revendication 8, dans lequel les informations sur au moins un autre réseau comprennent des informations sur la disponibilité d'un réseau de communications mobiles visité.
